# EUROPÄISCHE PATENTSCHRIFT

(11) **EP 2 492 123 B1**
(45) Veröffentlichungstag und Bekanntmachung des Hinweises auf die Patenterteilung: **07.09.2016**
(21) Anmeldenummer: 12156299.5
(22) Anmeldetag: 21.02.2012
(51) Int. Cl.: B60J 10/00

(54) **Fensterelement für eine Seitentür, insbesondere eine hintere Seitentür, eines Kraftwagens**
Window element for a side door, in particular a rear side door of a motor vehicle
Elément de fenêtre pour une porte latérale, notamment une porte latérale arrière, d'un véhicule automobile

(30) Priorität: 24.02.2011 DE 102011012256
(43) Veröffentlichungstag der Anmeldung: 29.08.2012
(73) Patentinhaber: Richard Fritz Holding GmbH, 74354 Besigheim (DE)
(72) Erfinder: Mück, Thomas, 74376 Gemmrigheim (DE); Castagnola, Luciano, 73733 Esslingen-Mettingen (DE); Link, Eckbert, 71701 Schwieberdingen (DE)
(74) Vertreter: Maser, Jochen

(56) Entgegenhaltungen:
- DE-A1- 4 106 715
- DE-T2- 60 317 567
- GB-A- 678 891
- JP-A- 2007 276 686
- US-A- 5 027 569
- US-A- 5 529 366
- US-A1- 2006 156 632

## Beschreibung

Die Erfindung betrifft ein Fensterelement für eine Seitentür, insbesondere eine hintere Seitentür, eines Kraftwagens gemäß Patentanspruch 1.

Aus dem Serienbau von Kraftwagen ist es bekannt, dass Seitentüren insbesondere von Kombifahrzeugen ein erstes Fensterportal sowie ein sich daran anschließendes zweites Fensterportal aufweisen. Um die Fensterportale mit einer jeweiligen Seitenscheibe versehen zu können, wird ein Rahmenelement an einem Rohbau der Seitentür befestigt. Ferner wird an dem Rohbau eine einem der Fensterportale zugeordnete Seitenscheibe befestigt, welche relativ zu dem Rohbau unbeweglich ist. Darüber hinaus sind Abdeckelemente vorgesehen, welche Rahmenteile des Rahmenelements und/oder Fahrzeugsäulen der Karosserie des Kraftwagens zumindest bereichsweise abdecken, um den optischen Eindruck der Seitentür positiv zu gestalten.

Aus der JP 2007-2766686 A ist ein Fensterelement für eine Seitentür bekannt, welche eine feststehende Scheibe mit einer die Scheibe umlaufenden Umspritzung als Abdichtung umfasst. Diese Umspritzung weist entlang einer Seitenkante einen Aufnahmeabschnitt für eine auf- und abbewegbare Scheibe auf, wobei dazwischenliegend ein Einclipsteil eingespritzt ist, um eine Blende aufclipsbar aufzunehmen.

Aus der US 2006/0156632 A1 ist des Weiteren ein Fensterelement für eine Seitentür bekannt, welches eine abdichtende Umspritzung der festen Seitenscheibe aufweist, wobei im Bereich eines Fensterführungssteges die Seitenscheibe mit der Umspritzung mittels zwei zusammenclipsbaren Hälften ein Führungssteg ausgebildet ist.

Aus der DE 41 06 715 A1 ist eine Befestigungsanordnung für eine Seitenscheibe mit einer umlaufenden Abdichtung bekannt, welche mittels eines Klemmelementes in der gewünschten Lage befestigt wird, wobei das Klemmelement mit einer Schraubverbindung im Bereich eines Fensterführungssteges positioniert ist.

Aus der US 5,027,569 ist eine Befestigungsanordnung für eine Windschutzscheibe bekannt, bei welcher ein Montageblock in einem Randbereich der Windschutzscheibe angeklebt ist, wobei in dem Montageblock ein zusätzlicher Befestigungsanker eingefasst ist, mittels dem die Windschutzscheibe mit der Karosserie eines Fahrzeugs verschraubt wird.

Aus der DE 603 17 567 T2 ist eine Befestigungsanordnung für eine Scheibe bekannt, bei der ebenfalls ein Montageblock an einer Scheibe befestigt ist, in welchem zur Verschraubung an ein Karosserieteil eines Fahrzeugs eine Bohrung für ein Schraubmittel vorgesehen ist.

Bei der Befestigung und der Montage des Rahmenelements, der Seitenscheibe, der Abdeckelemente sowie gegebenenfalls weiterer Bauteil kann es zu Toleranzen kommen, deren Kompensation eine zeit- und damit kostenaufwändige Montage bedingt sowie gegebenenfalls nur sehr schwer möglich ist.

Es ist daher Aufgabe der vorliegenden Erfindung, ein Fensterelement für eine Seitentür, insbesondere eine hintere Seitentür, eines Kraftwagens bereitzustellen, welches eine vereinfachte Montage aufweist.

Diese Aufgabe wird durch ein Fensterelement für eine Seitentür, insbesondere eine hintere Seitentür, eines Kraftwagens mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Ein erfindungsgemäßes Fensterelement für eine Seitentür, insbesondere eine hintere Seitentür, eines Kraftwagens, insbesondere eines

Personenkraftwagens, umfasst wenigstens ein eine Führung aufweisendes Rahmenelement, durch welches ein erstes Fensterportal sowie ein sich daran anschließendes weiteres Fensterportal der Seitentür zumindest bereichsweise begrenzt sind. Mittels des Rahmenelements ist eine Seitenscheibe zwischen einer das erste Fensterportal verschließenden und wenigstens einer das erste Fensterportal zumindest bereichsweise freigebenden Stellung entlang der Führung führbar. Das erfindungsgemäße Fensterelement umfasst ferner einen Fenstersteg, mittels welchem ein das erste und das weitere Fensterportal räumlich, insbesondere in Fahrzeuglängsrichtung, voneinander trennendes Rahmenteil des Rahmenelements zumindest bereichsweise abgedeckt ist. Ferner umfasst das erfindungsgemäße Fensterelement eine fest am Rahmenelement gehaltene Seitenscheibe, mittels welcher das weitere Fensterportal überdeckt ist. Die an dem Rahmenelement gehaltene Seitenscheibe ist zumindest bereichsweise im Randbereich mit einem ersten und mit einem zweiten Kunststoff umspritzt, wobei der erste Kunststoff härter als der zweite Kunststoff ist. Durch den ersten Kunststoff ist wenigstens ein Schraubmittel zum Ausbilden einer Verschraubung mit dem Fenstersteg und/oder mit einem Türrohbau der Tür gebildet. Die an dem Rahmenelement gehaltene Seitenscheibe ist dabei beispielsweise in einem Randbereich mit dem wenigstens einen Kunststoff, insbesondere durch ein Spritzgießverfahren, umspritzt. Vorteilhafterweise ist vorgesehen, dass durch den ersten Kunststoff wenigstens ein Befestigungsmittel und/oder zumindest eine entsprechende Funktionsstruktur gebildet ist, über welche der Fenstersteg sowie gegebenenfalls ein einer Fahrzeugsäule, insbesondere einer B-Säule oder einer C-Säule, zugeordnetes Abdeckelement an dem Rahmenelement befestigt ist.

Bei diesem Befestigungsmittel bzw. der Funktionsstruktur kann es sich beispielsweise um wenigstens ein Clipselement handeln, mittels welchem der Fenstersteg und/oder das Abdeckelement mit dem Rahmenelement über den ersten Kunststoff verclipst ist. Durch dieses Verclipsen ist der Fenstersteg und/oder das Abdeckelement mit dem Rahmenelement verrastet, wobei dieses Verrasten auf einfache, zeit- und damit kostengünstige Weise durchführbar ist. Durch die geschilderte Umspritzung der an dem Rahmenelement gehaltenen Seitenscheibe mit dem ersten und zweiten Kunststoff und die dadurch ausgebildete Verschraubung des ersten Kunststoffs mit dem Fenstersteg und/oder mit dem Türrohbau sowie durch die Befestigbarkeit des Abdeckelements über den ersten Kunststoff an dem Rahmenelement sind Lagetoleranzen des Fensterstegs sowie gegebenenfalls des Abdeckelements relativ zu der an dem Rahmenelement gehaltenen Seitenscheibe vermieden. Dadurch weist das Fensterelement eine vereinfachte und somit zeit- und kostengünstigere Montage auf. Zusätzliche und zeit- und damit kostenaufwändige Montagevorgänge zum Toleranzausgleich sind nicht vorgesehen und nicht vonnöten. Die Vermeidung der Lagetoleranzen ist insbesondere dadurch gegeben, dass Anschlussgeometrien beziehungsweise die Darstellung der Verschraubbarkeit und der Befestigbarkeit aus einem Werkzeug sind, das heißt mittels ein und desselben Werkzeugs durch den Kunststoff hergestellt sind.

Das erfindungsgemäße Fensterelement weist ferner eine besonders geringe Teileanzahl und damit eine besonders geringe Anzahl an Montagevorgängen auf, was die Montagekosten und damit die Gesamtkosten des Fensterelements und damit des gesamten Kraftwagens gering hält.

Durch den härteren der Kunststoffe ist die geschilderte Verschraubbarkeit des Kunststoffs und damit des Rahmenelements mit dem Fenstersteg und/oder mit dem Türrohbau sowie gegebenenfalls das Befestigungsmittel zum Befestigen des Fensterstegs am Rahmenelement ausgebildet. Durch den weicheren der Kunststoffe ist bevorzugt eine Abdichtfunktion dargestellt, wodurch das Rahmenelement zum Türrohbau und/oder anderweitigen Bauteilen, insbesondere Blechbauteilen, der Seitentür abgedichtet ist.

Ferner kann durch den weicheren der Kunststoffe eine Verbindung zur Führung, welche beispielsweise als Fensterlaufschiene ausgebildet ist, dargestellt sein. Dadurch ist eine besonders hohe Funktionsintegration des erfindungsgemäßen Fensterelements geschaffen, wodurch dieses eine geringe Teileanzahl sowie einen besonders geringen Montageaufwand aufweist. Dies geht einher mit besonders geringen Montage- und damit besonders geringen Gesamtkosten.

Bei einer weiteren Ausführungsform kann vorgesehen sein, dass das Abdeckelement und/oder der Fenstersteg durch eine so genannte Zwei-Komponenten-Umspritzung der am Rahmenelement gehaltenen Seitenscheibe gebildet sind. Dabei ist die am Rahmenelement gehaltene Seitenscheibe mit einem Zwei-Komponenten-Kunststoff versehen, durch welchen das Abdeckelement und der Fenstersteg sowie die geschilderte Verschraubbarkeit und gegebenenfalls das Befestigungsmittel ausgebildet sind. Dies hält die Teileanzahl des Fensterelements gering. Die Ausbildung insbesondere des Abdeckelements als separates Einzelteil birgt jedoch den Vorteil, dass sie als Diebstahlschutz eine Verschraubung des Rahmenelements mit dem Türrohbau abdecken sowie für einen optisch positiven Eindruck der Seitentür sorgen kann.

Bei einer weiteren Ausführungsform der Erfindung sind zumindest die am Rahmenelement gehaltene Seitenscheibe, der Fenstersteg und das Rahmenelement zu einem Modulbauteil zusammengefasst. Durch dieses Modulbauteil ist eine Aufaddierung von Toleranzen insbesondere in Fahrzeuglängsrichtung vermieden. Ferner ermöglicht dieses Modulbauteil eine besonders einfache und damit zeit- und kostengünstige Montage. Die Zusammenfassung des Rahmenteils, des Fensterstegs und der am Rahmenelement gehaltenen Seitenscheibe zu dem Modulbauteil ermöglicht es ferner, das Modulbauteil zeitlich zumindest im Wesentlichen parallel zur Fertigung der Seitentür herzustellen und vorzumontieren und dann in dem vormontierten Zustand als Zusammenbau beispielsweise an ein Fertigungsband des Kraftwagens anzuliefern. Dann kann das Modulbauteil als Zusammenbau an der Seitentür, insbesondere dem Türrohbau, zeit- und kostengünstig montiert werden. Durch diese Zusammenfassung zu dem Modulbauteil sind zeit- und kostenaufwändige Montagevorgänge zum Ausgleich von Toleranzen nicht vorgesehen und nicht vonnöten.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne der Rahmen der Erfindung zu verlassen.

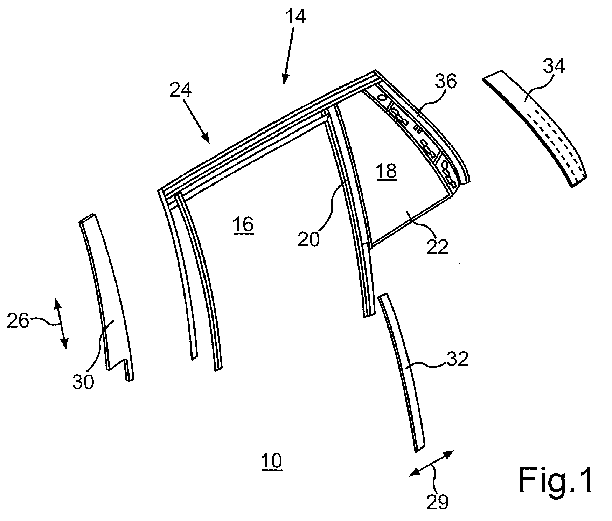

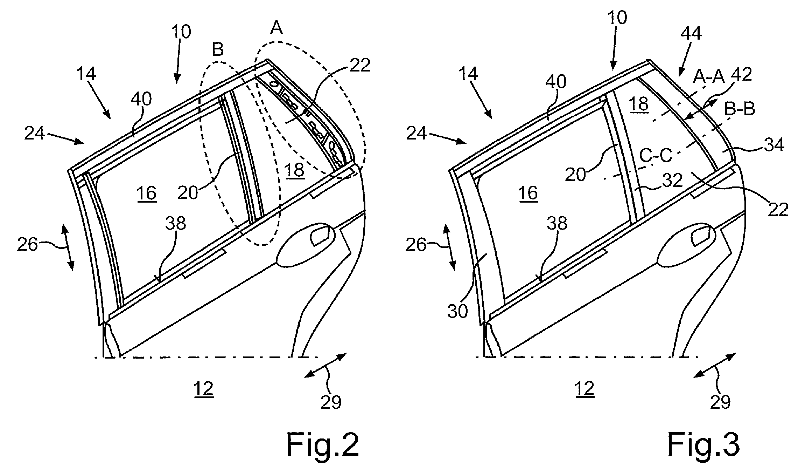

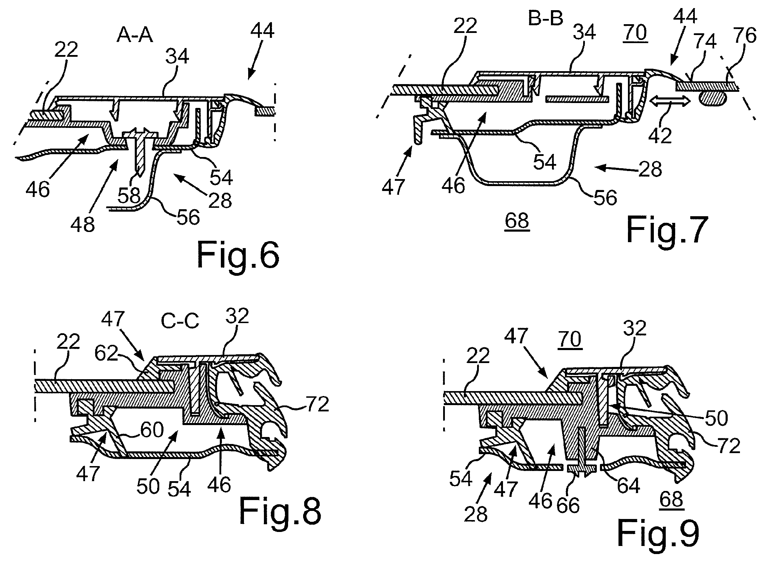

Die Zeichnung zeigt in:
1. eine schematische und perspektivische Explosionsansicht eines Fensterelements für eine hintere Seitentür eines Personenkraftwagens, mit einem ein erstes sowie ein sich daran heckseitig anschließendes, weiteres Fensterportal teilweise begrenzenden Rahmenelement, einer dem weiteren Fensterportal zugeordneten, an dem Rahmenelement gehaltenen Dreiecksscheibe, einem an dem Rahmenelement zu haltenden Fenstersteg, einer einer B-Säule des Personenkraftwagens zugeordneten Blende und einer einer C-Säule des Personenkraftwagens zugeordneten Blende;
2. ausschnittsweise eine schematische Perspektivansicht einer hinteren Seitentür eines Personenkraftwagens mit dem Rahmenelement und der Dreiecksscheibe gemäß Fig. 1;
3. ausschnittsweise eine schematische Perspektivansicht der Seitentür gemäß Fig. 2 mit dem Fensterelement gemäß Fig. 1;
4. ausschnittsweise eine schematische Perspektivansicht der Seitentür gemäß Fig. 2;
5. ausschnittsweise eine schematische Perspektivansicht der Seitentür gemäß Fig. 2;
6. ausschnittsweise eine schematische Querschnittsansicht der Seitentür gemäß Fig. 3 entlang einer in der Fig. 3 gezeigten Schnittlinie A-A;
7. ausschnittsweise eine schematische Querschnittsansicht der Seitentür gemäß Fig. 3 entlang einer in der Fig. 3 gezeigten Schnittlinie B-B;
8. ausschnittsweise eine schematische Querschnittsansicht der Seitentür gemäß Fig. 3 entlang einer in der Fig. 3 gezeigten Schnittlinie C-C; und
9. ausschnittsweise eine weitere Querschnittsansicht der Seitentür gemäß Fig. 8.

Die Fig. 1 zeigt ein Fensterelement 10 für eine Seitentür 12 (Fig. 2) für einen als Kombifahrzeug ausgebildeten Personenkraftwagen. Bei der Seitentür 12 handelt es sich um eine in Fahrzeuglängsrichtung hintere Seitentür, welche als Fondtür bezeichnet wird und in Fahrzeuglängsrichtung hinter einer Fronttür angeordnet ist.

Das Fensterelement 10 umfasst ein Rahmenelement 14, durch welches ein erstes Fensterportal 16 sowie ein sich in Fahrzeuglängsrichtung gemäß einem Richtungspfeil 29 heckseitig an das Fensterportal 16 anschließendes Fensterportal 18 teilweise begrenzt ist. Das Rahmenelement 14 weist ein Rahmenteil 20 auf, durch welches die Fensterportale 16 und 18 in Fahrzeuglängsrichtung gemäß dem Richtungspfeil 29 räumlich voneinander getrennt sind.

Darüber hinaus umfasst das Rahmenelement 14 eine Dreiecksscheibe 22, durch welche das Fensterportal 18 abgedeckt ist und welche fest an dem Rahmenelement 14 gehalten ist. Dies bedeutet, dass es sich bei der Dreiecksscheibe 22 um eine feste Seitenscheibe handelt, welche relativ zum Rahmenelement 14 sowie insgesamt zur Seitentür 12 unbeweglich ist.

Das Rahmenelement 14 umfasst außerdem eine so genannte Fensterlaufschiene 24, welche eine Führung bereitstellt. Die Führung dient zum Führen einer dem Fensterportal 16 zugeordneten Seitenscheibe, die entlang der Führung der Fensterlaufschiene 24 zwischen einer das Fensterportal 16 zumindest bereichsweise freigebenden und wenigstens einer das Fensterportal 16 demgegenüber verschließenden Stellung in Fahrzeughochrichtung gemäß einem Richtungspfeil 26 bewegbar ist.

Bei der Montage der Seitentür 12 wird das Rahmenelement 14 mit der Fensterlaufschiene 24 und der Dreiecksscheibe 22 an eine Fugenlinie auf einen Türrohbau 28 (Fig. 6) aufgesteckt, an, das heißt relativ zu, einer Blende 30 ausgerichtet und mit beispielsweise zwei Schrauben von außen und drei Schrauben von innen an dem Türrohbau 28 festgeschraubt. Es erfolgen keine weiteren Richtarbeiten.

Die Blende 30 ist einer B-Säule der Karosserie des Personenkraftwagens zugeordnet und dient dazu, die B-Säule zumindest bereichsweise abzudecken. Die Blende 30 wird dabei an der B-Säule montiert, ausgerichtet und mit drei Schrauben am Rohbau der Karosserie befestigt, woran sich die Montage des Fensterelements 10 anschließt.

Das Fensterelement 10 umfasst weiterhin einen Fenstersteg 32, welcher das Rahmenteil 20 zumindest bereichsweise abdeckt und welcher an dem Rahmenelement 14 befestigt wird, indem der Fenstersteg 32 mit dem Rahmenelement 14 verclipst wird. Es erfolgt kein Ausrichten.

Darüber hinaus umfasst das Fensterelement 10 eine Blende 34, welche mit dem montierten Rahmenelement 14 verclipst wird. Auch dabei erfolgt kein weiteres Ausrichten. Die Blende 34 ist dabei einer C-Säule der Karosserie des Personenkraftwagens zugeordnet und dient dazu, die C-Säule sowie ein Rahmenteil 36 des Rahmenelements 14 zumindest bereichsweise abzudecken und so für einen optisch guten Eindruck des Rahmenelements 14 zu sorgen. Die Fig. 1 gibt dabei einen Überblick über Einzelteile oberhalb einer Bordkante 38 (Fig. 2), insbesondere zur Führung der dem Fensterportal 16 zugeordneten Seitenscheibe.

Die Fig. 2 und 3 illustrieren den geschilderten Montagevorgang des Fensterelements 10 und der Blende 30. Zunächst wird das Rahmenelement 14 mit der Fensterlaufschiene 24 und der Dreiecksscheibe 22 vormontiert, wobei insbesondere die Fensterlaufschiene 24 an einer Blende 40 ausgerichtet wird. Anschließend wird die Fensterlaufschiene 24 oben fertig montiert. Die Dreiecksscheibe 22 wird am Fenstersteg 32 mit drei Schrauben in korrespondierenden Langlöchern befestigt, wobei kein Ausrichten erfolgt. Ferner wird die Dreiecksscheibe 22 hinten mit zwei Schrauben über korrespondierende Langlöcher am Türrohbau 28 befestigt, wobei ebenfalls kein Ausrichten erfolgt.

Der Fig. 3 zu entnehmen ist, dass die Blende 30 mit drei Schrauben befestigt wird und kein Ausrichten durchgeführt wird. Schließlich wird der Fenstersteg 32 verclipst. Ebenso wird die Blende 34 mit dem Rahmenelement 14 verclipst. Ein durch einen Richtungspfeil 42 in der Fig. 3 angedeuteter Ausgleich von Lagetoleranzen wird über eine Fugenlippe 44 an einer hinteren Türfuge durchgeführt. Durch die Zusammenfassung des Rahmenelements 14, des Fensterstegs 32 und der Dreiecksscheibe 22 zu einem Modulbauteil sind Lagetoleranzen vom Fenstersteg 32 und der hinteren Blende 34 relativ zur Dreiecksscheibe 22 vermieden.

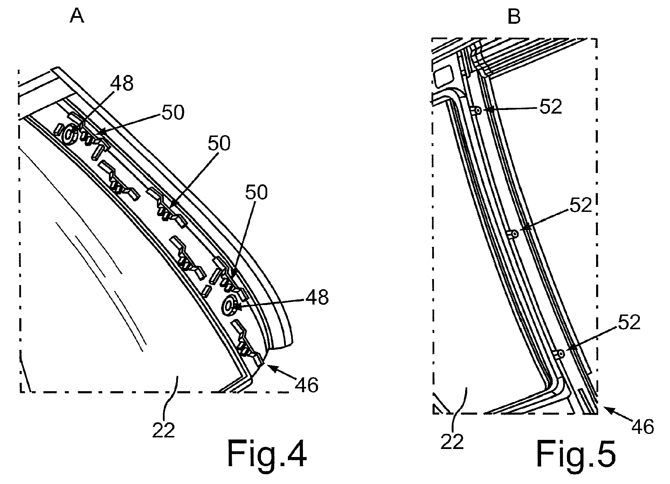

Die Fig. 4 zeigt die Seitentür 12 gemäß Fig. 2 in einem markierten Bereich A. Wie der Fig. 4 zu entnehmen ist, ist die Dreiecksscheibe 22 in Randbereichen der Dreiecksscheibe 22 mit einem ersten Kunststoff 46 umspritzt. Durch den Kunststoff 46 sind Verschraubungsmittel 48 gebildet, wobei es sich beispielsweise um Anschraubdome mit einem Innengewinde oder Durchtrittsöffnungen handeln kann. Durch diese Schraubmittel 48 kann die Dreiecksscheibe 22 mit dem Türrohbau 28 von außen her verschraubt werden, wodurch das Rahmenelement 14 mit dem Türrohbau 28 verschraubt werden kann. Ferner sind durch den Kunststoff 46 Clipselemente 50 gebildet, mittels welchen die hintere Blende 34 verclipst und geführt werden kann.

Die Fig. 5 zeigt die Seitentür 12 gemäß Fig. 2 in einem markierten Bereich B. Auch in dem Bereich B ist die Dreiecksscheibe 22 in Randbereichen mit dem Kunststoff 46 umspritzt. Durch den Kunststoff 46 sind auch in dem Bereich B Schraubmittel 52 gebildet, mittels welchen der Fenstersteg 32 mit dem Rahmenelement 14 verschraubt werden kann.

Die Fig. 6 und 9 zeigen die Umspritzung der Dreiecksscheibe 22 mit dem Kunststoff 46 sowie mit einem weiteren Kunststoff 47, mit welchem die Dreiecksscheibe 22 ebenso versehen ist. Dabei ist der Kunststoff 46 härter ausgebildet als der Kunststoff 47. Wie insbesondere der Fig. 6 zu entnehmen ist, sind durch den härteren Kunststoff 46 die Schraubmittel 48 sowie die Clipselemente 50 gebildet, so dass der Kunststoff 46 und über diesen die Dreiecksscheibe 22 besonders fest am Türrohbau 28 befestigt werden kann. Der Türrohbau 28 umfasst dabei ein erstes Blechbauteil 54 sowie ein mit diesem verbundenes, beispielsweise verschweißtes, weiteres Blechbauteil 56. In der Fig. 6 ist eine Schraube 58 erkennbar, mittels welcher der Kunststoff 46 über das als Durchgangsöffnung ausgebildete Schraubmittel 48 mit dem Türrohbau 28 verschraubt ist. Ferner ist die der C-Säule zugeordnete hintere Blende 34 über den harten beziehungsweise härteren Kunststoff 46 mit dem Rahmenelement 14 verclipst.

Wie insbesondere der Fig. 7 zu entnehmen ist, ist durch den weicheren beziehungsweise weichen Kunststoff 47 eine Abdichtfunktion dargestellt, wodurch das Rahmenelement 14 beziehungsweise die Dreiecksscheibe 22 gegen den Türrohbau 28 abgedichtet ist. Dazu ist beispielsweise eine Dichtlippe 60 durch den weicheren Kunststoff 47 ausgebildet, die an dem Blechbauteil 54 anliegt.

Der härtere Kunststoff 46 dient, wie insbesondere der Fig. 8 zu entnehmen ist, auch dazu, den Fenstersteg 32 an dem Rahmenelement 14 zu befestigen, indem der Fenstersteg 32 mit dem härteren Kunststoff 46 verclipst wird. Durch den weicheren Kunststoff 47 ist eine weitere Dichtlippe 62 ausgebildet, welche an dem Fenstersteg 32 sowie an der Dreiecksscheibe 22 anliegt, und eine Dichtfunktion erfüllt.

Die Fig. 9 zeigt einen durch den härteren Kunststoff 46 gebildeten Anschraubdom 64 der Schraubmittel 48, welcher ein Innengewinde aufweist. In den Anschraubdom 64 ist eine Schraube 66 eingeschraubt, so dass die Dreiecksscheibe 22 über den Anschraubdom 64 von einer Innenseite 68 der Seitentür 12 und damit des Personenkraftwagens her an den Türrohbau 28 beziehungsweise an dem Blechbauteil 54 befestigt werden kann. Neben der Innenseite 68 ist eine Außenseite 70 der Seitentür 12 beziehungsweise des Personenkraftwagens erkennbar.

In den Fig. 6 und 7 ist erkennbar, dass die Fugenlippe 44 an der Blende 34 gehalten ist. Dazu bildet die Fugenlippe 44 eine Hintergreifung mit der Blende 34 aus und ist so mit dieser verclipst.

Wie den Fig. 8 und 9 zu entnehmen ist, dient der härtere Kunststoff 46 auch dazu, ein Dicht- und Führungselement 72 zu halten, durch welches die dem Fensterportal 16 zugeordnete Seitenscheibe geführt und abgedichtet wird. Somit kann keine Feuchtigkeit von der Außenseite 70 zur Innenseite 68 und damit in einen Innenraum des Personenkraftwagens eindringen kann.

In der Fig. 7 ist der Richtungspfeil 42 gezeigt, welcher den Toleranzausgleich durch die der C-Säule zugeordnete Fugenlippe 44 andeutet. Der Toleranzausgleich wird dabei durch Verschieben auf einer Dichtfläche 74 einer Fondseitenscheibe 76 gemäß dem Richtungspfeil 42 durchgeführt.

In den Fig. 8 und 9 ist ferner eines der Clipselemente 50 erkennbar, welches durch den härteren Kunststoff 46 dargestellt ist und über welches der Fenstersteg 32 mit dem Rahmenelement 14 verclipst ist.

## Patentansprüche

1. Fensterelement (10) für eine Seitentür (12), insbesondere eine hintere Seitentür (12), eines Kraftwagens, mit wenigstens einem eine Führung (24) aufweisenden Rahmenelement (14), durch welches ein erstes Fensterportal (16) und ein sich daran anschließendes weiteres Fensterportal (18) zumindest bereichsweise begrenzt sind und mittels welchem eine Seitenscheibe zwischen einer das erste Fensterportal (16) verschließenden und wenigstens einer das erste Fensterportal (16) zumindest bereichsweise freigebenden Stellung entlang der Führung (24) führbar ist, mit einem Fenstersteg (32), mittels welchem ein das erste und das weitere Fensterportal (16, 18) räumlich voneinander trennendes Rahmenteil (20) des Rahmenelements (14) zumindest bereichsweise abgedeckt ist, und mit einer fest am Rahmenelement (14) gehaltenen Seitenscheibe (22), mittels welcher das weitere Fensterportal (18) überdeckt ist, **dadurch gekennzeichnet, dass** die am Rahmenelement (14) gehaltene Seitenscheibe (22) zumindest bereichsweise im Randbereich mit einem ersten Kunststoff (46) und einem zweiten Kunststoff (47) umspritzt ist, wobei der erste Kunststoff (46) härter als der zweite Kunststoff (47) ist, und dass durch den ersten Kunststoff (46) wenigstens ein Schraubmittel (48, 52, 64) zum Ausbilden einer Verschraubung mit dem Fenstersteg (32) und/oder mit einem Türrohbau (28) der Seitentür (12) gebildet ist.

2. Fensterelement (10) nach Anspruch 1,
**dadurch gekennzeichnet, dass**
das Schraubmittel (48, 52, 64), als ein Außengewinde und/oder ein Innengewinde und/oder ein Verschraubungsdom (64) und/oder dergleichen, zum Ausbilden der Verschraubung gebildet ist.

3. Fensterelement (10) nach einem der Ansprüche 1 oder 2,
**dadurch gekennzeichnet, dass**
durch den ersten Kunststoff (46) zumindest ein weiteres Befestigungsmittel (50), insbesondere ein Clipselement (50), zum Befestigen, insbesondere Verclipsen, des Fensterstegs (32) und/oder eines Abdeckelements (34) an bzw. mit dem Rahmenelement (14) gebildet ist.

4. Fensterelement (10) nach Anspruch 3,
**dadurch gekennzeichnet, dass**
das über das Befestigungsmittel (50) an dem Rahmenelement (14) befestigte Abdeckelement (34) als eine einer Fahrzeugsäule, insbesondere einer C-Säule, des Kraftwagens zugeordnete Blende (34) ausgebildet ist.

5. Fensterelement (10) nach einem der vorhergehenden Ansprüche,
**dadurch gekennzeichnet, dass** durch den zweiten Kunststoff (47) wenigstens ein Dichtungselement gebildet ist zum Abdichten des Fensterelements (10) gegen einen Rohbau (28) der Seitentür (12).

6. Fensterelement (10) nach einem der vorhergehenden Ansprüche,
**dadurch gekennzeichnet, dass**
die am Rahmenelement (14) gehaltene Seitenscheibe (22), der Fenstersteg (32) und das Rahmenelement (14) zu einem Modulbauteil zusammengefasst sind.

## Claims

1. Window element (10) for a side door (12), in particular a rear side door (12), of a motor vehicle, having at least one frame element (14) comprising a guide (24) and defining, at least in some regions, a first window portal (16) and a further window portal (18), connecting to said first window portal, a side pane being guidable by means of said frame element along the guide (24) between a position closing the window portal (16) and at least one position releasing the first window portal (16), at least over regions, said window element having a window web (32), by means of which a frame part (20) of the frame element (14) is covered, at least in some regions, said frame part (14) spatially separating the first and further window portals (16, 18) from one another, and having a side pane (22) held rigidly on the frame element (14), the further window portal (18) being covered by means of said side pane, **characterised in that** the side pane (22) held on the frame element (14) is, at least in some regions, molded in a border area with a first plastic material (46) and a second plastic material (47), wherein the first plastic material (46) is harder than the second plastic material (47) and that by the first plastic material (46) at least one screw means (48, 52, 64) is formed for providing a screwed connection to the window web (32) and/or to a door carcass (28) of the side door (12).

2. Window element (10) according to claim 1, **characterised in that** at least one screw means (48, 52, 64), as an outer thread and/or an inner thread and/or a screw dome (64) and/or the like is formed by the plastics material (46, 47) to form the screwed connection.

3. Window element (10) according to either claim 1 or claim 2, **characterised in that** the plastics material (46, 47) is used for connecting the at least one further fastening means (50), in particular a clip element (50) to fasten, in particular to clip, the window web (32) and/or a cover element (34) on or to the frame element (14).

4. Window element (10) according to claim 3, **characterised in that** the cover element (34) fastened on the frame element (14) via the fastening means (50) is formed as a screening panel (34) assigned to a vehicle pillar, in particular a C-pillar, of the motor vehicle.

5. Window element (10) according to any one of the preceding claims, **characterised in that** the side pane (22) held on the frame element (14) is provided, in particular molded, at least in some regions, with a further plastics material (47) compared to the at least one plastics material (46), at least one sealing element being formed by the further plastics material (47) for sealing the window element (10) with respect to a carcass (28) of the side door (12).

6. Window element (10) according to any one of the preceding claims, **characterised in that** the side pane (22) held on the frame element (14), the window web (32) and the frame element (14) are assembled to form a modular component.

## Revendications

1. Élément de fenêtre (10) pour une porte latérale (12), en particulier pour une porte latérale arrière (12) d'un véhicule automobile, avec au moins un élément de cadre (14) qui présente un guide (24) et par lequel sont délimitées, au moins dans certaines zones, une première baie de fenêtre (16) et, contiguë à celle-ci, une autre baie de fenêtre (18) et au moyen duquel une vitre latérale peut glisser le long du guide (24) entre une position qui ferme la première baie de fenêtre (16) et au moins une position qui libère au moins dans certaines zones la première baie de fenêtre (16), avec un profilé de fenêtre (32) au moyen duquel un composant de cadre (20) de l'élément de cadre (14) qui sépare spatialement l'une de l'autre la première et l'autre baie de fenêtre (16, 18) est recouvert au moins dans certaines zones, et avec une vitre latérale (22) qui est maintenue de manière fixe sur l'élément de cadre (14) et au moyen de laquelle l'autre baie de fenêtre (18) est recouverte, **caractérisé en ce que** la vitre latérale (22) maintenue sur l'élément de cadre (14) est surmoulée dans la zone périphérique avec une première matière plastique (46) et avec une deuxième matière plastique (47), et ce au moins dans certaines zones, la première matière plastique (46) étant plus dure que la deuxième matière plastique (47), et **en ce qu'**au moins un moyen de vissage (48, 52, 64) est formé par la première matière plastique (46) en vue de former un raccord vissé avec le profilé de fenêtre (32) et/ou avec une structure de porte brute (28) de la porte latérale (12).

2. Élément de fenêtre (10) selon la revendication 1, **caractérisé en ce que**
le moyen de vissage (48, 52, 64) est réalisé sous la forme d'un filet extérieur et/ou d'un filet intérieur et/ou d'un dôme de vissage (64) et/ou d'autres pièces similaires en vue de former le raccord vissé.

3. Élément de fenêtre (10) selon l'une quelconque des revendications 1 ou 2, **caractérisé en ce que**
au moins un autre moyen de fixation (50), en particulier un élément clipsé (50), est formé par la première matière plastique (46) en vue de fixer, en particulier clipser, le profilé de fenêtre (32) et/ou un élément de recouvrement (34) sur ou avec l'élément de cadre (14).

4. Élément de fenêtre (10) selon la revendication 3, **caractérisé en ce que**
l'élément de recouvrement (34) fixé sur l'élément de cadre (14) par le biais de l'élément de fixation (50) est réalisé sous la forme d'une baguette de parement (34) affectée à un montant de véhicule, en particulier un montant C, du véhicule automobile.

5. Élément de fenêtre (10) selon l'une quelconque des revendications précédentes, **caractérisé en ce que** au moins un élément d'étanchéité est formé par la deuxième matière plastique (47) en vue d'étanchéifier l'élément de fenêtre (10) par rapport à une structure brute (28) de la porte latérale (12).

6. Élément de fenêtre (10) selon l'une quelconque des revendications précédentes, **caractérisé en ce que** la vitre latérale (22) maintenue sur l'élément de cadre (14), le profilé de fenêtre (32) et l'élément de cadre (14) sont assemblés pour former un élément modulaire.
